# EUROPEAN PATENT SPECIFICATION

(11) **EP 3 552 863 B1**
(45) Date of publication and mention of the grant of the patent: **24.11.2021**
(21) Application number: 18305429.5
(22) Date of filing: 10.04.2018
(51) Int. Cl.: B60L 53/35

(54) **MECHANICAL DEVICE FOR CHARGING STATION**
MECHANISCHE VORRICHTUNG FÜR EINE LADESTATION
DISPOSITIF MÉCANIQUE POUR STATION DE CHARGE

(43) Date of publication of application: 16.10.2019
(73) Proprietor: HAGER-ELECTRO SAS, 67210 Obernai (FR); Hager Electro GmbH & Co. KG, 66440 Blieskastel (DE)
(72) Inventor: Agnoletto, Thibaud, 69009 Lyon (FR); Laugel, Joachim, 68180 Horbourg-Wihr (FR); Meyer, Loic, 67114 Eschau (FR); Reiner, Ulrich, 67691 Hochspeyer (DE); Simon, Michel, 60800 Dessenheim (FR)
(74) Representative: Cabinet Nuss

(56) References cited:
- DE-A1- 4 236 286
- DE-A1-102009 001 080
- US-A- 5 821 731
- US-A1- 2013 249 470

## Description

The invention relates to the field of electric vehicles. The invention relates to a mechanical device for charging station.

Document US 2017/0096073 A1 discloses a system that comprises an arm for positioning under an electric vehicle. This arm has an electric connector and has a telescopic member that permit the arm to be extended upward, until a connector couples with a corresponding connector underneath the vehicle, and downward, and to bring the arm below the ground surface when not in use. The arm is moveable to different positions by way of two linear actuators. A linear actuator can orient the arm in a fore/aft position relative to the vehicle and another linear actuator can orient the arm in a right/left position relative to the vehicle. This system has the drawback to be complex and to use several linear actuators. Moreover, a high precision is required, when moving the arm, to enable the coupling of the connectors together.

Further mechanical positioning devices for primary contacts or primary coils of electric vehicle charging stations are known from DE4236286 A1 and DE102009001080 A1.

This invention has as its object to remedy to this drawback by proposing a mechanical device for charging station configured to ease the connection between a charger plug of a charging station and a charging receiver of an electric vehicle.

For this purpose, the present invention relates to a mechanical device for charging station comprising at least:
- an arm, suitable to be mechanically connected with a charger plug for supplying electric energy to an electric vehicle, having first and second ends, the first end being suitable to be mechanically connected to the charger plug,
mechanical device comprising :
- translation means mechanically connected to the second end of the arm arranged for moving the arm in a translation motion at least along a first direction and a second direction, the first and second directions being opposite,
   said translation means being pivotally connected to the second end of the arm by a first pivot,
- a first actuator for automatically actuating the translation means, characterized by
- at least return means and at least a cam, which are at least mechanically connected to the second end of the arm for further moving the arm in a rotation motion around said first pivot during said translation motion, so that the arm is suitable to be tilted between an initial angle and a final angle, and thus the first end of the arm is arranged to move up from a first height to a second height or move down from said second height to said first height, the cam comprising at least a cam profile and a follower, the cam profile being suitable to cooperate with said follower, the follower being mechanically connected to the return means, the cam being configured such that when the cam profile and the follower are in contact, the cam is provided to convert the translation motion of the arm into the rotation motion of the arm, the return means being provided to create a torque on the first pivot in the elevation direction of the arm, the torque, applied by the return means, being also provided to maintain the contact between the cam profile and the followers,
- first locking means mechanically connected to the first end of the arm projecting perpendicularly to a longitudinal direction of the arm,
- second locking means suitable to cooperate with said first locking means and arranged parallel to said first direction and second direction,
said first and second locking means being arranged, when connected together, to prevent said further rotation motion during said translation motion along said second direction until a threshold distance is reached, so that the arm is tilted at said initial angle, and thus said first end is arranged at said first height,
said first and second locking means being arranged to be disconnected when said threshold distance is reached to permit said further rotation motion during said translation motion along said first direction, so that the arm is tilted from said initial angle to said final angle, and thus said first end being arranged to move up from said first height to said second height, or to permit said further rotation motion during said translation motion along said second direction, so that the arm is tilted from said final angle to said initial angle, and thus said first end being arranged to move down from said second height to said first height,
said first and second locking means being arranged, when cooperating together, to prevent said further rotation motion during said translation motion along said first direction starting from said threshold distance, so that the arm is tilted at said initial angle, and thus said first end being arranged at said first height.

The invention will be better understood using the description below, which relates to at least one preferred embodiment, given by way of non-limiting example and explained with reference to the accompanying drawings, in which
- figure 1 is a perspective view of the mechanical device for charging station according to the invention connected to a charger plug,
- figure 2 is a side view of the mechanical device of figure 1 showing the arm at first height, locking means in an inserted position and a locking element in an unlocked position,
- figures 3 and 4 are side views of the mechanical device of figure 1 showing the arm tilted and said locking element in an unlocked position,
- figures 5 and 6 are side views of the mechanical device of figure 1 showing the arm at first height, said locking means in said inserted position and the locking element in a locked position,
- figure 7 is a side view of the mechanical device of figure 1 showing the arm at first height, said locking means in said inserted position and the locking element in said unlocked position,
- figure 8 is a perspective view of a protection enclosure in which said mechanical device according to the invention is enclosed.

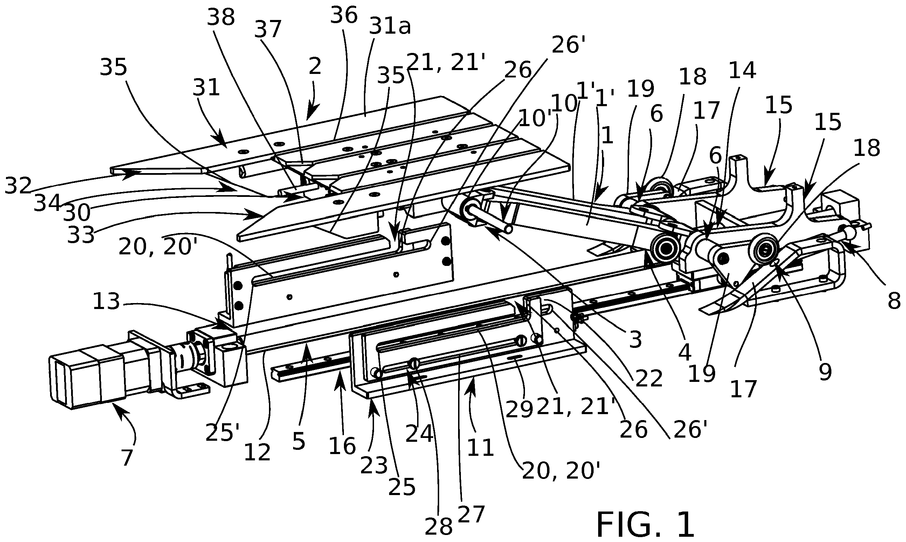

The figures 1 to 7 show a mechanical device for charging station comprising at least:
- an arm 1, suitable to be mechanically connected with a charger plug 2 for supplying electric energy to an electric vehicle (not shown), having first and second ends 3, 4, the first end 3 being suitable to be mechanically connected to the charger plug 2.

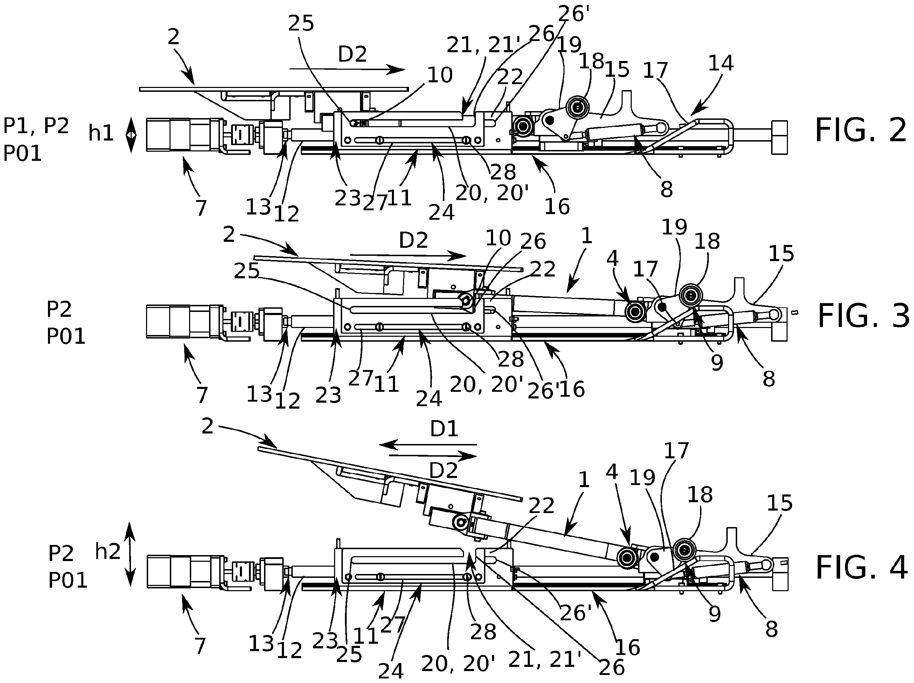

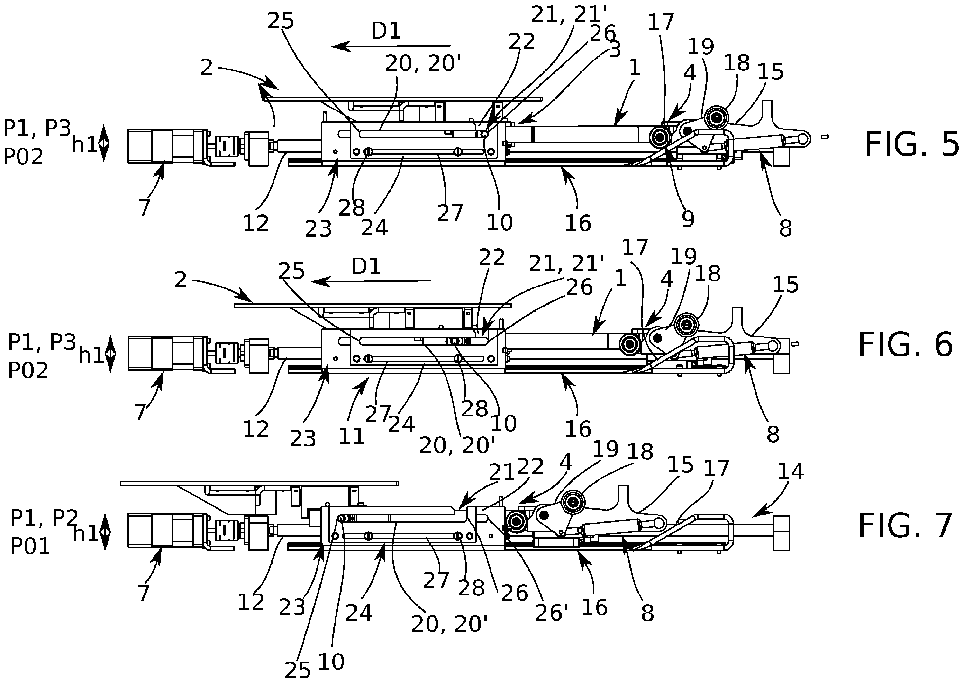

According to this invention, the mechanical device comprises:
- translation means 5 mechanically connected to the second end 4 of the arm 1 arranged for moving the arm 1 in a translation motion at least along a first direction D1 and a second direction D2, the first and second directions D1, D2 being opposite,
   said translation means 5 being pivotally connected to the arm 1 by a first pivot 6 (figures 1 to 7),
- a first actuator 7 for automatically actuating the translation means 5 (figures 1 to 7),
- at least return means 8 and at least a cam 9, which are at least mechanically connected to the second end 4 of the arm 1 for further moving the arm 1 in a rotation motion around said first pivot 6 during said translation motion, so that the arm 1 is suitable to be tilted between an initial angle and a final angle, and thus the first end 3 of the arm 1 is arranged to move up from a first height h1 (figures 2, 5 to 7) to a second height h2 (figure 4) or move down from said second height h2 to said first height h1,
- first locking means 10 mechanically connected to the first end 3 of the arm 1 projecting perpendicularly to a longitudinal direction of the arm 1 (figures 1 to 7),
- second locking means 11 suitable to cooperate with said first locking means 10 and arranged parallel to said first direction D1 and second direction D2 (figures 1 to 7),
said first and second locking means 10, 11 being arranged, when connected together, to prevent said further rotation motion during said translation motion along said second direction D2 until a threshold distance is reached, so that the arm 1 is tilted at said initial angle, and thus said first end 3 is arranged at said first height h1 (figure 2),
said first and second locking means 10, 11 being arrangedto be disconnected when said threshold distance is reached to permit said further rotation motion during said translation motion along said first direction D1, so that the arm 1 is tilted from said initial angle to said final angle, and thus said first end 3 being arranged to move up from said first height h1 to said second height h2, or to permit said further rotation motion during said translation motion along said second direction D2, so that the arm 1 is tilted from said final angle to said initial angle, and thus said first end 3 being arranged to move down from said second height h2 to said first height h1 (figures 3 and 4) ,
said first and second locking means 10, 11 being arranged, when cooperating together, to prevent said further rotation motion during said translation motion along said first direction D1 from said threshold distance, so the arm 1 is tilted at said initial angle, and thus said first end 3 being arranged at said first height h1 (figures 5, 6 and 7).

An advantage of the present invention is that only one actuator (first actuator 7) is required to drive the motion of the arm 1 for coupling the charger plug 2 and the charging receiver together. Thus only one actuator (first actuator 7) needs to be controlled. The mechanical device according to the invention is provided to permit the translation of the arm 1, along the first direction D1 and the second direction D2, which are opposite, when the arm 1 is at the horizontal (initial angle) as well as when the arm 1 is tilted (final angle). The mechanical device according to the invention is also provided to permit the rotation of the arm 1,

The mechanical device according to the invention is suitable to be located underneath an electric vehicle.

Advantageously, when the charger plug 2 is connected to the mechanical device according to the invention, the charger plug 2 can be moved in the direction of the bottom (not shown) of the electric vehicle on which the charging receiver (not shown) of the electric vehicle is located (upward elevation). Then, the charger plug 2 can be moved in translation in the direction of the charging receiver, while being guided by the bottom of the electric vehicle and then in the reverse direction. Then, the charger plug 2 can be moved in the direction of the ground (not shown) (downward elevation).

Advantageously, the first and second locking elements 10, 11 are provided to prevent said rotation motion of the arm 1, when not required. Thus, the arm 1 is only moved in said translation motion.

Preferably, the first direction D1 and the second direction D2 are horizontal.

Preferably, the first actuator 7 consists in an electric motor and the translation means 5 comprises a worm drive 12 having first and second ends 13, 14, the first end 13 being mechanically connected to the electric motor, so that it drives said worm drive 12, and the second end 14 being mechanically connected to support means 15, which are mechanically connected to the second end 4 of the arm 1.

Advantageously, said worm drive 12 is provided to convert a rotation motion of the electric motor in a translation motion.

Preferably, the mechanical device comprises linear guiding means 16 mechanically connected to the second end 4 of the arm 1.

Advantageously, said linear guiding means 16 are provided to guide said second end 4 of the arm 1 along said translation motion along first and second directions D1, D2.

For instance, said linear guiding means 16 consists in a sliding guide.

Preferably, the linear guiding means 16 are affixed to a support, such as the ground.

Preferably, the linear guiding means 16 are mechanically connected to the support means 15.

The at least one cam 9 comprises at least a cam profile 17 and a follower 18, the cam profile 17 being suitable to cooperate with said follower 18, the follower 18 being mechanically connected to the return means 8.

As shown in figure 1, the mechanical device comprises preferably two cams 9, and each of these cams 9 comprises one cam profile 17 and one follower 18.

When the cam profile 17 and the follower 18 are in contact (figures 1, 3 and 4), the cam 9 is provided to convert the translation motion of the arm 1 into a rotation motion of the arm 1. Moreover, the return means 8 are provided to create a torque on the first pivot 6 in the elevation direction of the arm 1. The torque, which is applied by the return means 8, are also provided to maintain the contact between the cam profile 17 and the follower 18.

Preferably, the return means 8 comprise at least a pneumatic cylinder.

Preferably, the support means 15 are mechanically connected to the follower 18 and to the return means 8 for connecting the return means 8 and the cam 9/follower 18 to the second end 4 of the arm 1.

Preferably, the follower 18 is mounted on a support plate 19 pivotally mounted on the support means 15 around first pivot 6, the return means 8 being mechanically connected to the support plate 19.

Preferably, the follower 18 consists in a roller, as shown in figures 1 to 7.

Preferably, the cam profile 17 consists in an inclined guide rail arranged parallel to said first direction D1 and second direction D2.

As shown in figure 1, preferably each of the two cams 9 comprises one inclined guide rail.

For instance, the inclined guide rail could be affixed to a support, such as the ground.

Preferably, the first locking means 10 comprises at least a pin and the second locking means 11 comprises at least one linear groove 20, 20', the pin being suitable to be connected with the linear groove 20, 20', so that in an inserted position P1 of said first and second locking means 10, 11, the pin is inserted in the groove 20, 20', for moving said arm 1 in said translation motion at said first height h1.

As shown in figures 2, 5, 6 and 7, the pin is inserted into said groove 20, 20', and thus the rotation motion of the arm 1 is prevented during the translation motion along first or second directions D1, D2. Consequently, the first end 3 of the arm 1 is maintained at first height h1.

Preferably, the pin of the first locking means 11 is mounted on a pivot 10' to control pitch trim.

Preferably, the second locking means 11 comprises at least an insertion hole 21, 21' opening on the at least one linear groove 20, 20' and suitable to insert/remove the pin in/from the at least one linear groove 20, 20'.

As shown in figure 3, when the pin is into said insertion hole 21, 21', thus the rotation motion of the arm 1 is permitted, from said threshold distance, during the translation motion along first or second directions D1, D2. Consequently, the first end 3 of the arm 1 may be moved up from first height h1 to second height h2.

Preferably, the threshold distance is reached, when the pin is inserted into or faces said insertion hole 21, 21'.

Preferably, the second locking means 11 comprises a locking element 22 arranged to permit the removal/insertion of the pin from/in the at least one linear groove 20, 20' through the insertion hole 21, 21', in a unlocked position P2 of the locking element 22, and/or to prevent the removal of the pin from the at least one linear groove 20, 20' through the insertion hole 20, 20', in a locked position P3 of the locking element 22.

As shown in figures 2 and 7, in the unlocked position P2, the locking element 22 is arranged to authorize the passage of the pin through the insertion hole 21, 21'. However, as the pin doesn't face the insertion hole 21, 21', the pin cannot be removed from the at least one linear groove 20, 20'.

As shown in figure 3, in the unlocked position P2, if the pin faces the insertion hole 21, 21', the locking element 22 is arranged to authorize the passage of the pin through the insertion hole 20, 20'.

As shown in figure 5, in the locked position P3, even if the pin faces the insertion hole 21, 21', the locking element 22 is arranged to prevent the passage of the pin through the insertion hole 20, 20'.

As shown in figure 6, in the locked position P3, the locking element 22 is arranged to prevent the passage of the pin through the insertion hole 20, 20'.

Preferably, the second locking means 11 comprises a first element 23 and second element 24 comprising respectively first and second linear grooves 20, 20' facing at least partially each other, and comprising respectively first and second insertion holes 21, 21', the second linear groove 20' comprising a first end 25 and a second end 26, which respectively form a first stop and a second stop, the first element 23 comprising the locking element 22, the second element 24 being slidably mounted on said first element 23 and being suitable to move by means of the pin of the first locking means 10 inserted into the first and second grooves 20, 20' between a first position P01 and a second position P02, so that in the first position P01 corresponding to the unlocked position P2, the first and second insertion holes 21, 21' face each other and so that in the second position P02 corresponding to the locked position P3, the locking element 22 and the second insertion hole 21' face each other.

Advantageously, as shown in figures 2 and 3, when the first and second locking means 10, 11 are in the inserted position P1 and the arm 1 is moved in the translation motion along said second direction D2 and until the pin reaches the second stop, the second element 24 stays in the first position P01 and the locking element 22 is in the unlocked position P2. When the first and second locking means 10, 11 are in the inserted position P1 and the arm 1 is moved latter in the translation motion along said second direction D2 and the pin reaches the second stop, as the pin is moving, it causes the second element 24 to move from the first position P01 to the second position P02. More generally, when the pin is stopped by the first stop or the second stop, the second element 24 is moved relative to the first element 23. In this second position P02, the locking element 22 is in the locked position P3, as illustrated in figure 5. As illustrated in figures 6 and 7, when the first and second locking means 10, 11 are in the inserted position P1 and the arm 1 is moved latter in the translation motion along said first direction D1 and the pin reaches the first stop, as the pin is moving pin, it causes the second element 24 to move from the second position P02 to the first position P01. In this first position P01, the locking element 22 is in the unlocked position P2, as illustrated in figures 2 and 7.

Moreover as shown in figure 4, when the arm 1 is moved in the rotation motion, the second element 24 is also in the first position P01.

Preferably, the first groove 20 has a first length and the second groove 20' has a second length which is smaller than said first length.

Preferably, the second linear groove 20' comprises a first end 25' and a second end 26'.

Preferably, the locking element 22 consists in a hook located between said first insertion hole 21 and said second end 26'.

Preferably, the second element 24 is slidably mounted on said first element 23 by connection means, such as a guiding groove 27 parallel to the second groove 20' and cooperating with at least two screws 28 connected to the firs element 23 and inserted in said guiding groove 27 (figures 1 to 7).

Preferably, the first element 23 is a plate having a L section. The first element 23 could be fixed to a support such as the ground by fixation means 29.

Preferably, the second element 24 is a planar plate.

Preferably, the arm 1 comprises two bars 1' forming a parallelogram which are linked at each end by connection supports comprising pivots.

This configuration of the arm 1 is provided to correct lateral positioning error.

Preferably, the charger plug 2 for supplying electric energy to an electric vehicle 3 comprises at least a first electric connector 30 comprising at least one first electric contact (not shown), a support 31 comprising a bottom face (not shown) on which the first electric connector 30 is mounted and an upper face 31a arranged to slide on the bottom of the electric vehicle, the first electric connector 30 being arranged to be coupled with a corresponding second electric connector (not shown) of a charging receiver (not shown) located on the bottom of the electric vehicle so that the at least one first electric contact being electrically connected with at least one second electric contact (not shown) of the second electric connector.

The support 30 comprises guiding means 32, 33 comprising a reception area 34 arranged to surround at least partially the charging receiver and arranged to align the first electric connector 30 and the second electric connector, when moving the charger plug 2 in the direction of the charging receiver or conversely.

The guiding means 32, 33 are provided to mechanically align the first electric connector 30 with the second electric connector of the charging receiver, so that they can connect properly to charge the battery of the electric vehicle with electric energy. These mechanical guiding means 32, 33 advantageously are not likely to be damaged because of extreme temperatures, rain, snow, ice, external corrosion and/or dust.

More particularly, the upper face 31a can slide on the bottom of the electric vehicle 3 in the direction of the charging receiver, until the guiding means 32, 33 lean against the charging receiver and that the reception area 34 and a portion of complementary shape of the charging receiver connect together. Or, the bottom of the electric vehicle can slide on the upper face 31a, until the guiding means 32, 33 lean against the charging receiver and that the reception area 34 and a portion of complementary shape of the charging receiver connect together.

Preferably, the guiding means comprises a first member 32 projecting from the support 31 on a first lateral side of the first electric connector 30 and a second member 33 projecting from the support 31 on a second lateral side of the first electric connector 30 respectively delimiting a first portion and a second portion of the reception area 34, the first member 32 and the second member 33 being positioned at a predetermined distance from one to another and being separated from one to another by a base portion of the reception area 34.

Preferably, the reception area 34 has a U-shaped delimited by the first portion, the second portion and the base portion.

Preferably, the charger plug 2 comprises means 35 for opening a protection lid (not shown) of the charging receiver arranged to cooperate with corresponding means for opening the protection lid of the charging receiver.

These means for opening 35 the protection lid of the charging receiver are provided to automatically open the protection lid, after the connection between the portion of the protection lid and the reception area 34, so that the protection lid uncovers the second electric connector to enable the electric connection between the second electric contact and the first electric contact. Thus, the protection lid enables protecting the second electric connector from the outdoor conditions as long as it is not connected to first electric connector 34, without disturbing a subsequent connection with the first electric connector 34, thanks to the means for opening the protection lid.

Preferably, the means for opening the protection lid comprise a first inclined guide rail 35 projecting from the bottom face of the support 31 and surrounding the first lateral side of the first electric connector 30, and a second inclined guide rail 35 projecting from the bottom face of the support 31 and surrounding the second lateral side of the first electric connector 34, the first inclined guide rail 35 and the second inclined guide rail 35 being arranged to cooperate respectively with the corresponding means for opening the protection lid of the charging receiver consisting of a first protrusion (not shown) projecting from a first lateral wall (not shown) of the protection lid of the charging receiver and a second protrusion (not shown) projecting from a second lateral wall of the protection lid.

These first inclined guide rail 35 and second inclined guide rail 35 respectively are provided to lean against the first protrusion and second protrusion, when the charger plug 2 and the charging receiver are moved relative to each other, in order to rotate the protection lid from a first position (not shown) to a second position (not shown), in the clockwise direction and then uncover the second electric connector.

Preferably, the first inclined guide rail 35 protrudes perpendicularly to the bottom face of the support 31 along the first portion of the reception area 34 and the second inclined guide rail 35 protrudes perpendicularly to the bottom face of the support 31 along the second portion of the reception area 34.

Preferably and as shown in the figures, the support 31 has a planar shape comprising the bottom face on which the first electric connector 30 is mounted and the upper face 31a arranged to slide on the bottom of the electric vehicle.

This planar shape is provided to ease the sliding of the support 31 with respect to the bottom of the electric vehicle 3.

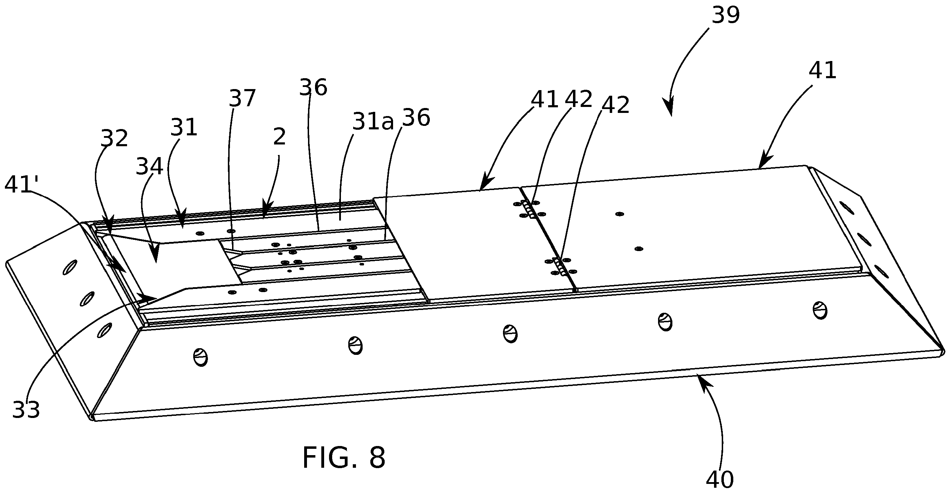

Preferably as shown in figures 1 and 8, the upper face 31a of the support 31 comprises a plurality of grooves 36, each groove 36 extending on a longitudinal direction of the support 31 and leading to the reception area 34 by an open end 37, each groove 36 being arranged to receive a corresponding pin (not shown) protruding from the bottom of the electric vehicle.

This plurality of grooves 36 is provided to improve the guiding of the support 31 with respect to the bottom of the electric vehicle.

According to a specificity of the groove 36, the open end 37 has a funnel shape.

This funnel shape is provided to ease the insertion of the pins in the grooves 36.

Preferably, the charger plug 2 comprises at least one positioning pin 38.

Preferably, the first electric connector 30 is a standard connector according to the standard IEC 62196-1/-2/-3.

The present invention also relates to a protection enclosure 39 for protecting said mechanical device according to the present invention.

Preferably, the protection enclosure 39 encloses the mechanical device in a closed position (figure 8) and encloses only partially the mechanical device in an open position (not shown). Indeed, in the open position, the arm 1 projects outside the protection enclosure 39.

Preferably, when the arm 1 is at height h1 and before said translation motion along first or second direction D1, D2, the protection enclosure 39 is in the closed position (figure 8).

Preferably, when the arm 1 is at height h1 and during said translation motion along first or second direction D1, D2, or when the arm 1 is tilted during said rotation motion, or when the arm 1 is at height h2 during said translation motion along first or second direction D1, D2, the protection enclosure is in the open position (not shown).

Moreover, when the arm 1 is connected to the charger plug 2, said charger plug 2 is also enclosed in the protection enclosure 39, at least partially, in the closed position (figure 8) and projects outside, in the open position (not shown).

Preferably, the protection enclosure 39 is suitable to be located on the ground and/or under the ground.

Preferably, the protection enclosures 39 comprises a base 40 having a reception area where the mechanical device according to the present invention is enclosed in said closed position, and cover means 41, 41', which covers the mechanical device. In said closed protection, the arm 1 is enclosed in the reception area and said cover means 41, 41' close, at least partially, the reception area and, in the open position, the arm 1 projects outside the reception area and said cover means 41, 41' does not totally close the reception area.

Moreover, when the arm 1 is connected to the charger plug 2, said charger plug 2 is also enclosed in the reception area and closes the reception area, in the closed position (figure 8), and projects outside the reception area, in the open position.

Preferably, the cover means 41 comprises two plates, which are linked together by at least one pivot 42, and which cover the arm 1.

These plates are provided to protect the arm 1 and to follow the rotation motion of the arm 1.

Preferably, the cover means 41' comprises another plate which covers the first actuator 7.

The invention also relates to a charging station comprising said mechanical device according to the present invention and/or said protection enclosure 39 according to the present invention.

The invention allows implementing a method according to the invention comprising the steps which are described below.

As shown in figure 2, according to a first step, the arm 1 is horizontal and is tilted at said initial angle, which is approximately equal to zero and the first end 3 is at first height h1. Then, the arm 1 is moved in said translation motion along said second direction D2 by means of said translation means 5, which are actuate by the first actuator 7 (figures 2 and 3).

Then, according to a second step, the translation direction changes from the second direction D2 to the first direction D1.

As shown in figures 3 and 4, after that, according to a third step, the arm 1 is moved in said further rotation motion during said translation motion along said first direction D1. Thus, the arm 1 is tilted from the initial angle to the final angle by means of the return means 8 and the cam 9. Consequently, the charger plug 2 can be moved in the direction of the bottom of the electric vehicle on which the charging receiver of the electric vehicle is located.

Then, according to a fourth step, the arm 1, which is tilted at said final angle, firstly is moved in said translation motion along said first direction D1. Then, according to a fifth step, secondly the arm 1 is moved in said translation motion along said second direction D2 (not shown). Consequently, the charger plug 2 can be moved in the direction of the charging receiver while being guided by the bottom of the electric vehicle.

Then, according to a sixth step, the arm 1 is moved in said further rotation motion during said translation motion along said second direction D2 (figure 4). Thus, the arm 1 is tilted from the final angle to the initial angle by means of the return means 8 and the cam 9. Then, the translation direction changes from the second direction D2 to the first direction D1.

As shown in figures 5, 6 and 7, according to a seventh step, the arm 1 is horizontal and is tilted at said initial angle, which is approximately equal to zero and the first end 3 is at first height h1. Then, the arm 1 is moved in said translation motion along said first direction D1 by means of said translation means 5, which are actuate by the first actuator 7 (figures 5, 6 and 7).

As shown in figure 2, according to the first step, the first and second locking means 10, 11 are connected together to prevent rotation, when moving the arm 1 in translation motion along second direction D2.

According to the third step, when the threshold distance is reached as shown in figure 3, the first and second locking means 10, 11 could be disconnected to permit rotation, when moving the arm 1 in translation motion along first direction D1. As shown in figure 4, the first and second locking means 10, 11 are disconnected to permit rotation motion.

As shown in figure 5, 6 and 7, according to the seventh step, the first and second locking means 10, 11 are connected together to prevent rotation, when moving the arm 1 in translation motion along the first direction D1.

Preferably, when the mechanical device comprises a locking element 12 as described above, according to the first, second, third, fourth and fifth steps, the locking element 12 is in the unlocked position P2.

Preferably, when the mechanical device comprises a locking element 12 as described above, according to the sixth step the locking element is moved from the unlocked position P2 to the locked position P3 (figure 5). Indeed, during said translation motion along said second direction D2, the pin reaches the second stop and moves the second element 24. Then, the translation direction changes from the second direction D2 to the first direction D1.

Preferably, when the mechanical device comprises a locking element 12 as described above, according to the seventh step the locking element is moved from the locked position P3 to the unlocked position P2 (figure 5). Indeed, during said translation motion along said first direction D1, the pin reaches the first stop and moves the second element 24. direction D1.

Preferably, when the mechanical device is enclosed in the protection enclosure 39: according to the first step, the protection enclosure 39 moves from the closed position to the open position.

Preferably, during the second, third, fourth, fifth, and sixth steps, the protection enclosure 39 is in the open position.

Preferably, conversely according to the seventh step, the protection enclosure 39 moves from the open position to the closed position.

Of course, the invention is not limited to the at least one embodiment described and represented in the accompanying drawings. Modifications remain possible, as long as they fall within the scope of the appended claims.

## Claims

1. Mechanical device for a charging station comprising at least:
- an arm (1), suitable to be mechanically connected with a charger plug (2) for supplying electric energy to an electric vehicle, having first and second ends (3, 4), the first end (3) being suitable to be mechanically connected to the charger plug (2),
the mechanical device further comprising :
- translation means (5) mechanically connected to the second end (4) of the arm (1) arranged for moving the arm (1) in a translation motion at least along a first direction (D1) and a second direction (D2), the first and second directions (D1, D2) being opposite,
said translation means (5) being pivotally connected to the second end (4) of the arm (1) by a first pivot (6),
- a first actuator (7) for automatically actuating the translation means (5),
- **characterized by**
- at least return means (8) and at least a cam (9), which are at least mechanically connected to the second end (4) of the arm (1) for further moving the arm (1) in a rotation motion around said first pivot (6) during said translation motion, so that the arm (1) is suitable to be tilted between an initial angle and a final angle, and thus the first end (3) of the arm (1) is arranged to move up from a first height (h1) to a second height (h2) or move down from said second height (h2) to said first height (h1), the cam (9) comprising at least a cam profile (17) and a follower (18), the cam profile (17) being suitable to cooperate with said follower (18), the follower (18) being mechanically connected to the return means (8), the cam being configured such that when the cam profile (17) and the follower (18) are in contact, the cam (9) is provided to convert the translation motion of the arm (1) into the rotation motion of the arm (1), the return means (8) being provided to create a torque on the first pivot (6) in the elevation direction of the arm (1), the torque, applied by the return means (8), being also provided to maintain the contact between the cam profile (17) and the followers (18),
- first locking means (10) mechanically connected to the first end (3) of the arm (1) projecting perpendicularly to a longitudinal direction of the arm (1),
- second locking means (11) suitable to cooperate with said first locking means (10) and arranged parallel to said first direction (D1) and second direction (D2),
said first and second locking means (10, 11) being arranged, when connected together, to prevent said further rotation motion during said translation motion along said second direction (D2) until a threshold distance is reached, so that the arm (1) is tilted at said initial angle, and thus said first end (3) is arranged at said first height (h1),
said first and second locking means (10, 11) being arranged to be disconnected when said threshold distance is reached to permit said further rotation motion during said translation motion along said first direction (D1), so that the arm (1) is tilted from said initial angle to said final angle, and thus said first end (3) being arranged to move up from said first height (h1) to said second height (h2), or to permit said further rotation motion during said translation motion along said second direction (D2), so that the arm (1) is tilted from said final angle to said initial angle, and thus said first end (3) being arranged to move down from said second height (h2) to said first height (h1),
said first and second locking means (10, 11) being arranged, when cooperating together, to prevent said further rotation motion during said translation motion along said first direction (D1) starting from said threshold distance, so that the arm (1) is tilted at said initial angle, and thus said first end (3) being arranged at said first height (h1).

2. Mechanical device according to claim 1, **characterized in that** the first actuator (7) consists in an electric motor and the translation means (5) comprises a worm drive (12) having first and second ends (13, 14), the first end (13) being mechanically connected the electric motor, so that it drives said worm drive (12), and the second end (14) being mechanically connected to support means (15), which are mechanically connected to the second end (4) of the arm (1).

3. Mechanical device according to claim 1, **characterized in that** the mechanical device comprises linear guiding means (16) mechanically connected to the second end (4) of the arm (1).

4. Mechanical device according to claim 2, **characterized in that** the support means (15) are mechanically connected to the follower (18) and to the return means (8) for mechanically connecting the return means (8) and the cam (9) to the second end (4) of the arm (1).

5. Mechanical device according to claim 4, **characterized in that** the follower (18) is mounted on a support plate (19) pivotally mounted on the support means (15) around first pivot (6), the return means (8) being mechanically connected to the support plate (19).

6. Mechanical device according to one of claim 1 to 5, **characterized in that** the follower (18) consists in a roller.

7. Mechanical device according to one of claim 1 to 6, **characterized in that** the cam profile (17) consists in an inclined guide rail arranged parallel to said first direction (D1) and second direction (D2).

8. Mechanical device according to one of claim 1 to 7, **characterized in that** the first locking means (10) comprises at least a pin and **in that** the second locking means (11) comprises at least one linear groove (20, 20'), the pin being suitable to be connected with the linear groove (20, 20'), so that in an inserted position (P1) of said first and second locking means (10, 11), the pin is inserted in the groove (20, 20), for moving said arm (1) in said translation motion at said first height (h1).

9. Mechanical device according to claim 8, **characterized in that** the second locking means (11) comprises at least an insertion hole (21, 21') opening on the at least one linear groove (20, 20') and suitable to insert/ remove the pin in/from the at least one linear groove (20, 20').

10. Mechanical device according to claim 9, **characterized in that** the second locking means (11) comprises a locking element (22) arranged to permit the removal/insertion of the pin from/in the at least one linear groove (20, 20') through the insertion hole (20, 20'), in a unlocked position (P2) of the locking element (22), and/or to prevent the removal of the pin from the at least one linear groove (20, 20') through the insertion hole (20, 20'), in a locked position (P3) of the locking element (22).

11. Mechanical device according to claim 10, **characterized in that** the second locking means (11) comprises a first element (23) and second element (24) comprising respectively first and second linear grooves (20, 20') facing at least partially each other, and comprising respectively first and second insertion holes (21, 21), the second linear groove (20) comprising a first end (25) and a second end (26), which respectively form a first stop and a second stop, the first element (23) comprising the locking element (22), the second element (24) being slidably mounted on said first element (23) and being suitable to move by means of the pin of the first locking means (10) inserted into the first and second grooves (20, 20') between a first position (P01) and a second position (P02), so that in the first position (P01) corresponding to the unlocked position (P2), the first and second insertion holes (21, 21) face each other, and so that in the second position (P02) corresponding to the locked position (P3), the locking element (22) and the second insertion hole (21') face each other.

12. Mechanical device according to claim 11, **characterized in that** the first groove (20) has a first length and the second groove (20') has a second length, which is smaller than said first length.

## Patentansprüche

1. Mechanische Vorrichtung für eine Ladestation, mindestens Folgendes umfassend:
- einen Arm (1), der dazu geeignet ist, mit einem Ladestecker (2) mechanisch verbunden zu werden, um ein Elektrofahrzeug mit elektrischer Energie zu versorgen, ein erstes und zweites Ende (3, 4) aufweisend, wobei das erste Ende (3) dazu geeignet ist, mit dem Ladestecker (2) mechanisch verbunden zu werden,
wobei die mechanische Vorrichtung ferner Folgendes umfasst:
- eine Translationseinrichtung (5), die mit dem zweiten Ende (4) des Arms (1) mechanisch verbunden und dazu angeordnet ist, den Arm (1) in einer Translationsbewegung zumindest entlang einer ersten Richtung (D1) und einer zweiten Richtung (D2) zu bewegen, wobei die erste und zweite Richtung (D1, D2) einander entgegengesetzt sind,
wobei die Translationseinrichtung (5) über einen ersten Drehzapfen (6) mit dem zweiten Ende (4) des Arms (1) verschwenkbar verbunden ist,
- ein erstes Stellglied (7), um die Translationseinrichtung (5) automatisch zu betätigen,
- **gekennzeichnet durch**
- mindestens eine Umkehreinrichtung (8) und mindestens eine Nocke (9), die zumindest mit dem zweiten Ende (4) des Arms (1) mechanisch verbunden sind, um den Arm (1) während der Translationsbewegung weiter in einer Drehbewegung um den ersten Drehzapfen (6) zu bewegen, sodass der Arm (1) dazu geeignet ist, zwischen einem Ausgangswinkel und einem Abschlusswinkel geneigt zu werden, und somit das erste Ende (3) des Arms (1) dazu angeordnet ist, sich von einer ersten Höhe (h1) zu einer zweiten Höhe (h2) aufwärts zu bewegen oder sich von der zweiten Höhe (h2) zur ersten Höhe (h1) hinab zu bewegen, wobei die Nocke (9) mindestens ein Nockenprofil (17) und einen Stößel (18) umfasst, wobei das Nockenprofil (17) dazu geeignet ist, mit dem Stößel (18) zusammenzuwirken, wobei der Stößel (18) mit der Umkehreinrichtung (8) mechanisch verbunden ist, wobei die Nocke derart ausgelegt ist, dass, wenn das Nockenprofil (17) den Stößel (18) berührt, die Nocke (9) dazu vorgesehen ist, die Translationsbewegung des Arms (1) in die Drehbewegung des Arms (1) umzuwandeln, wobei die Umkehreinrichtung (8) dazu vorgesehen ist, ein Drehmoment am ersten Drehzapfen (6) in Aufwärtsrichtung des Arms (1) zu erzeugen, wobei das von der Umkehreinrichtung (8) aufgebrachte Drehmoment auch vorgesehen ist, um den Kontakt zwischen dem Nockenprofil (17) und den Stößeln (18) aufrechtzuerhalten,
- eine erste Verriegelungseinrichtung (10), die mit dem ersten Ende (3) des Arms (1), das senkrecht zu einer Längsrichtung des Arms (1) vorsteht, mechanisch verbunden ist,
- eine zweite Verriegelungseinrichtung (11), die dazu geeignet ist, mit der ersten Verriegelungseinrichtung (10) zusammenzuwirken und parallel zur ersten Richtung (D1) und zweiten Richtung (D2) angeordnet ist,
wobei die erste und zweite Verriegelungseinrichtung (10, 11), wenn sie miteinander verbunden sind, dazu angeordnet sind, die weitere Drehbewegung während der Translationsbewegung entlang der zweiten Richtung (D2) zu verhindern, bis ein Entfernungsschwellenwert erreicht ist, sodass der Arm (1) in dem Ausgangswinkel geneigt ist und somit das erste Ende (3) in der ersten Höhe (h1) angeordnet ist,
wobei die erste und zweite Verriegelungseinrichtung (10, 11) dazu angeordnet sind, voneinander getrennt zu werden, wenn der Entfernungsschwellenwert erreicht ist, um die weitere Drehbewegung während der Translationsbewegung entlang der ersten Richtung (D1) zuzulassen, sodass der Arm (1) vom Ausgangswinkel in den Abschlusswinkel geneigt wird und somit das erste Ende (3) dazu angeordnet ist, sich von der ersten Höhe (h1) zur zweiten Höhe (h2) hinauf zu bewegen, oder die weitere Drehbewegung während der Translationsbewegung entlang der zweiten Richtung (D2) zuzulassen, sodass der Arm (1) vom Abschlusswinkel in den Ausgangswinkel geneigt wird und somit das erste Ende (3) dazu angeordnet ist, sich von der zweiten Höhe (h2) zur ersten Höhe (h1) nach unten zu bewegen,
wobei die erste und zweite Verriegelungseinrichtung (10, 11), wenn sie zusammenwirken, dazu angeordnet sind, die weitere Drehbewegung während der Translationsbewegung entlang der ersten Richtung (D1) beginnend am Entfernungsschwellenwert zu verhindern, sodass der Arm (1) im Ausgangswinkel geneigt ist und somit das erste Ende (3) in der ersten Höhe (h1) angeordnet ist.

2. Mechanische Vorrichtung nach Anspruch 1, **dadurch gekennzeichnet, dass** das erste Stellglied (7) aus einem Elektromotor besteht und die Translationseinrichtung (5) einen Schneckenantrieb (12) umfasst, der ein erstes und zweites Ende (13, 14) aufweist, wobei das erste Ende (13) mit dem Elektromotor mechanisch verbunden ist, sodass er den Schneckenantrieb (12) antreibt, und das zweite Ende (14) mit einer Trägereinrichtung (15) mechanisch verbunden ist, die mit dem zweiten Ende (4) des Arms (1) mechanisch verbunden ist.

3. Mechanische Vorrichtung nach Anspruch 1, **dadurch gekennzeichnet, dass** die mechanische Vorrichtung eine lineare Führungseinrichtung (16) umfasst, die mit dem zweiten Ende (4) des Arms (1) mechanisch verbunden ist.

4. Mechanische Vorrichtung nach Anspruch 2, **dadurch gekennzeichnet, dass** die Trägereinrichtung (15) mit dem Stößel (18) und der Umkehreinrichtung (8) mechanisch verbunden ist, um die Umkehreinrichtung (8) und die Nocke (9) mit dem zweiten Ende (4) des Arms (1) mechanisch zu verbinden.

5. Mechanische Vorrichtung nach Anspruch 4, **dadurch gekennzeichnet, dass** der Stößel (18) auf einer Trägerplatte (19) montiert ist, die auf der Trägereinrichtung (15) um den ersten Drehzapfen (6) drehbar montiert ist, wobei die Umkehreinrichtung (8) mit der Trägerplatte (19) mechanisch verbunden ist.

6. Mechanische Vorrichtung nach einem der Ansprüche 1 bis 5, **dadurch gekennzeichnet, dass** der Stößel (18) aus einer Rolle besteht.

7. Mechanische Vorrichtung nach einem der Ansprüche 1 bis 6, **dadurch gekennzeichnet, dass** das Nockenprofil (17) aus einer geneigten Führungsschiene besteht, die parallel zur ersten Richtung (D1) und zweiten Richtung (D2) angeordnet ist.

8. Mechanische Vorrichtung nach einem der Ansprüche 1 bis 7, **dadurch gekennzeichnet, dass** die erste Verriegelungseinrichtung (10) mindestens einen Stift umfasst, und dadurch, dass die zweite Verriegelungseinrichtung (11) mindestens eine lineare Nut (20, 20') umfasst, wobei der Stift dazu geeignet ist, mit der linearen Nut (20, 20') verbunden zu werden, sodass in einer eingesetzten Stellung (P1) der ersten und zweiten Verriegelungseinrichtung (10, 11) der Stift in die Nut (20, 20') eingesetzt ist, um den Arm (1) in der Translationsbewegung auf der ersten Höhe (h1) zu bewegen.

9. Mechanische Vorrichtung nach Anspruch 8, **dadurch gekennzeichnet, dass** die zweite Verriegelungseinrichtung (11) mindestens eine Einsetzbohrung (21, 21') umfasst, die sich zu der mindestens einen linearen Nut (20, 20') öffnet und dazu geeignet ist, den Stift in die mindestens eine lineare Nut (20, 20') einzusetzen oder daraus zu entfernen.

10. Mechanische Vorrichtung nach Anspruch 9, **dadurch gekennzeichnet, dass** die zweite Verriegelungseinrichtung (11) ein Verriegelungselement (22) umfasst, das dazu angeordnet ist, das Entfernen/Einsetzen des Stifts aus der mindestens einen linearen oder in die mindestens eine lineare Nut (20, 20') durch die Einsetzbohrung (20, 20') in einer Entriegelungsstellung (P2) des Verriegelungselements (22) zuzulassen und/oder das Entfernen des Stifts aus der mindestens einen linearen Nut (20, 20') durch die Einsetzbohrung (20, 20') in einer Verriegelungsstellung (P3) des Verriegelungselements (22) zu verhindern.

11. Mechanische Vorrichtung nach Anspruch 10, **dadurch gekennzeichnet, dass** die zweite Verriegelungseinrichtung (11) ein erstes Element (23) und ein zweites Element (24) umfasst, die eine erste bzw. zweite lineare Nut (20, 20') umfassen, die einander zumindest teilweise zugewandt sind, und eine erste bzw. zweite Einsetzbohrung (21, 21') umfassen, wobei die zweite lineare Nut (20) ein erstes Ende (25) und ein zweites Ende (26) umfasst, die einen ersten Anschlag bzw. einen zweiten Anschlag ausbilden, wobei das erste Element (23) das Verriegelungselement (22) umfasst, wobei das zweite Element (24) verschiebbar auf dem ersten Element (23) montiert ist und dazu geeignet ist, sich mittels des Stifts der ersten Verriegelungseinrichtung (10), der in die erste und zweite Nut (20, 20') eingesetzt ist, zwischen einer ersten Stellung (P01) und einer zweiten Stellung (P02) zu bewegen, sodass in der ersten Stellung (P01), die der Entriegelungsstellung (P2) entspricht, die erste und zweite Einsetzbohrung (21, 21') einander zugewandt sind, und sodass in der zweiten Stellung (P02), die der Verriegelungsstellung (P3) entspricht, das Verriegelungselement (22) und die zweite Einsetzbohrung (21') einander zugewandt sind.

12. Mechanische Vorrichtung nach Anspruch 11, **dadurch gekennzeichnet, dass** die erste Nut (20) eine erste Länge aufweist und die zweite Nut (20') eine zweite Länge aufweist, die kleiner als die erste Länge ist.

## Revendications

1. Dispositif mécanique pour une station de charge comprenant au moins :
- un bras (1), approprié pour être relié mécaniquement à un connecteur mâle de chargeur (2) pour fournir de l'énergie électrique à un véhicule électrique, comportant des première et seconde extrémités (3, 4), la première extrémité (3) étant appropriée pour être reliée mécaniquement au connecteur mâle de chargeur (2),
le dispositif mécanique comprenant en outre :
- un moyen de translation (5) relié mécaniquement à la seconde extrémité (4) du bras (1), prévu pour déplacer le bras (1) par un mouvement de translation au moins le long d'une première direction (D1) et une seconde direction (D2), les première et seconde directions (D1, D2) étant opposées,
ledit moyen de translation (5) étant relié de manière pivotante à la seconde extrémité (4) du bras (1) par un premier pivot (6),
- un premier actionneur (7) servant à actionner automatiquement le moyen de translation (5),
- **caractérisé par**
- au moins un moyen de rappel (8) et au moins une came (9), qui sont au moins reliés mécaniquement à la seconde extrémité (4) du bras (1) pour déplacer en outre le bras (1) par un mouvement de rotation autour dudit premier pivot (6) lors dudit mouvement de translation, de telle sorte que le bras (1) est approprié pour être basculé entre un angle initial et un angle final, et la première extrémité (3) du bras (1) est prévue pour se déplacer ainsi vers le haut d'une première hauteur (h1) à une seconde hauteur (h2) ou se déplacer ainsi vers le bas de ladite seconde hauteur (h2) à ladite première hauteur (h1), la came (9) comprenant au moins un profil de came (17) et un suiveur (18), le profil de came (17) étant approprié pour coopérer avec ledit suiveur (18), le suiveur (18) étant relié mécaniquement au moyen de rappel (8), la came étant conçue de telle sorte que, lorsque le profil de came (17) et le suiveur (18) sont en contact, la came (9) est prévue pour convertir le mouvement de translation du bras (1) en mouvement de rotation du bras (1), le moyen de rappel (8) étant prévu pour créer un couple sur le premier pivot (6) dans la direction d'élévation du bras (1), le couple appliqué par le moyen de rappel (8) étant également prévu pour maintenir le contact entre le profil de came (17) et les suiveurs (18),
- un premier moyen de verrouillage (10) relié mécaniquement à la première extrémité (3) du bras (1), faisant saillie perpendiculairement à une direction longitudinale du bras (1),
- un second moyen de verrouillage (11) approprié pour coopérer avec ledit premier moyen de verrouillage (10) et placé parallèlement à ladite première direction (D1) et ladite seconde direction (D2),
lesdits premier et second moyens de verrouillage (10, 11) étant prévus pour empêcher, lorsqu'ils sont accouplés, ledit mouvement de rotation supplémentaire lors dudit mouvement de translation le long de ladite seconde direction (D2) jusqu'à ce qu'une distance seuil soit atteinte, de sorte que le bras (1) est dans une position de basculement correspondant audit angle initial, et ladite première extrémité (3) est ainsi placée à ladite première hauteur (h1),
lesdits premier et second moyens de verrouillage (10, 11) étant prévus pour être désaccouplés lorsque ladite distance seuil est atteinte afin de permettre ledit mouvement de rotation supplémentaire lors dudit mouvement de translation le long de ladite première direction (D1), de sorte que le bras (1) est basculé dudit angle initial audit angle final, et ladite première extrémité (3) étant prévue pour se déplacer ainsi vers le haut de ladite première hauteur (h1) à ladite seconde hauteur (h2), ou afin de permettre ledit mouvement de rotation supplémentaire lors dudit mouvement de translation le long de ladite seconde direction (D2), de sorte que le bras (1) est basculé dudit angle final audit angle initial, et ladite première extrémité (3) étant prévue pour se déplacer ainsi vers le bas de ladite seconde hauteur (h2) à ladite première hauteur (h1),
lesdits premier et second moyens de verrouillage (10, 11) étant prévus pour empêcher, lorsqu'ils coopèrent l'un avec l'autre, ledit mouvement de rotation supplémentaire lors dudit mouvement de translation le long de ladite première direction (D1) à partir de ladite distance seuil, de sorte que le bras (1) est dans une position de basculement correspondant audit angle initial, et ladite première extrémité (3) étant ainsi placée à ladite première hauteur (h1).

2. Dispositif mécanique selon la revendication 1, **caractérisé en ce que** le premier actionneur (7) est constitué d'un moteur électrique et le moyen de translation (5) comprend un mécanisme d'entraînement à vis sans fin (12) comportant des première et seconde extrémités (13, 14), la première extrémité (13) étant reliée mécaniquement au moteur électrique, de telle sorte qu'il entraîne ledit mécanisme d'entraînement à vis sans fin (12), et la seconde extrémité (14) étant reliée mécaniquement à des moyens de support (15), qui sont reliés mécaniquement à la seconde extrémité (4) du bras (1) .

3. Dispositif mécanique selon la revendication 1, **caractérisé en ce que** le dispositif mécanique comprend un moyen de guidage linéaire (16) relié mécaniquement à la seconde extrémité (4) du bras (1).

4. Dispositif mécanique selon la revendication 2, **caractérisé en ce que** les moyens de support (15) sont reliés mécaniquement au suiveur (18) et au moyen de rappel (8) afin de relier mécaniquement le moyen de rappel (8) et la came (9) à la seconde extrémité (4) du bras (1).

5. Dispositif mécanique selon la revendication 4, **caractérisé en ce que** le suiveur (18) est installé sur une plaque de support (19) installée de manière pivotante sur les moyens de support (15) autour du premier pivot (6), le moyen de rappel (8) étant relié mécaniquement à la plaque de support (19).

6. Dispositif mécanique selon l'une des revendications 1 à 5, **caractérisé en ce que** le suiveur (18) est constitué d'un galet.

7. Dispositif mécanique selon l'une des revendications 1 à 6, **caractérisé en ce que** le profil de came (17) est constitué d'un rail de guidage incliné placé parallèlement auxdites première direction (D1) et seconde direction (D2).

8. Dispositif mécanique selon l'une des revendications 1 à 7, **caractérisé en ce que** le premier moyen de verrouillage (10) comprend au moins une goupille et **en ce que** le second moyen de verrouillage (11) comprend au moins une rainure linéaire (20, 20'), la goupille étant appropriée pour être accouplée avec la rainure linéaire (20, 20'), de telle sorte que, dans une position insérée (P1) desdits premier et second moyens de verrouillage (10, 11), la goupille est insérée dans la rainure (20, 20'), à des fins de déplacement dudit bras (1) par ledit mouvement de translation à ladite première hauteur (h1).

9. Dispositif mécanique selon la revendication 8, **caractérisé en ce que** le second moyen de verrouillage (11) comprend au moins un trou d'insertion (21, 21') débouchant sur l'au moins une rainure linéaire (20, 20'), et approprié pour insérer/extraire la goupille dans/de l'au moins une rainure linéaire (20, 20').

10. Dispositif mécanique selon la revendication 9, **caractérisé en ce que** le second moyen de verrouillage (11) comprend un élément de verrouillage (22) prévu pour permettre l'extraction/l'insertion de la goupille de/dans l'au moins une rainure linéaire (20, 20') à travers le trou d'insertion (20, 20') dans une position déverrouillée (P2) de l'élément de verrouillage (22), et/ou pour empêcher l'extraction de la goupille de l'au moins une rainure linéaire (20, 20') à travers le trou d'insertion (20, 20') dans une position verrouillée (P3) de l'élément de verrouillage (22).

11. Dispositif mécanique selon la revendication 10, **caractérisé en ce que** le second moyen de verrouillage (11) comprend un premier élément (23) et un second élément (24) comprenant respectivement des première et seconde rainures linéaires (20, 20') disposées au moins partiellement en regard, et comprenant respectivement des premier et second trous d'insertion (21, 21'), la seconde rainure linéaire (20') comprenant une première extrémité (25) et une seconde extrémité (26), qui forment respectivement une première butée et une seconde butée, le premier élément (23) comprenant l'élément de verrouillage (22), le second élément (24) étant installé à coulissement sur ledit premier élément (23) et étant approprié pour se déplacer par le biais de la goupille du premier moyen de verrouillage (10) insérée dans les première et seconde rainures (20, 20') entre une première position (P01) et une seconde position (P02), de telle sorte que, dans la première position (P01) correspondant à la position déverrouillée (P2), les premier et second trous d'insertion (21, 21') sont disposés en regard, et de telle sorte que, dans la seconde position (P02) correspondant à la position verrouillée (P3), l'élément de verrouillage (22) et le second trou d'insertion (21') sont disposés en regard.

12. Dispositif mécanique selon la revendication 11, **caractérisé en ce que** la première rainure (20) présente une première longueur et la seconde rainure (20') présente une seconde longueur, qui est inférieure à ladite première longueur.
